# EUROPÄISCHE PATENTSCHRIFT

(11) **EP 1 762 406 B1**
(45) Veröffentlichungstag und Bekanntmachung des Hinweises auf die Patenterteilung: **10.11.2010**
(21) Anmeldenummer: 06120257.8
(22) Anmeldetag: 07.09.2006
(51) Int. Cl.: B60H 1/24

(54) **Fahrzeug mit einem Lüftungssystem für die Scheiben und die Passagiersitze**
Vehicle with a ventilation system for the windows and seats
Véhicule avec un système de ventilation pour les sièges et les vitres

(30) Priorität: 09.09.2005 DE 102005043290
(43) Veröffentlichungstag der Anmeldung: 14.03.2007
(73) Patentinhaber: Ford Global Technologies, LLC, Dearborn, MI 48126 (US)
(72) Erfinder: Fischer, Dietmar, 50733, Köln (DE); Knoche, Volker, 40789, Monheim (DE); Meyer, Eckehard, Dr., North Geelong 3215 Victoria (AU)
(74) Vertreter: Dörfler, Thomas

(56) Entgegenhaltungen:
- DE-A1- 2 318 097
- JP-A- 5 085 150
- JP-A- 60 008 110

## Beschreibung

Die Erfindung betrifft ein Fahrzeug mit einem Lüftungssystem für die Scheiben und die Passagiersitze , wobei das Lüftungssystem erste Belüftungsöffnungen in einer Karosseriesäule, insbesondere B-Säule des Fahrzeugs, für ein Seitenfenster aufweist, die durch einen Luftführungskanal mit Luft versorgt werden.

Bei Kraftfahrzeugen ist es bekannt, daß insbesondere bei kalten oder nassen Witterungen die vorderen und hinteren Seitenscheiben aufgrund von Kondensation an der Innenseite beschlagen oder vereisen können. Um dieses Beschlagen der Scheiben zu vermeiden, ist es für die vorderen Seitenscheiben bekannt, in einem äußeren Randbereich eines Fahrzeuginstrumentenbrettes Defrosterdüsen des Lüftungssystems vorzusehen, die auf die vorderen Seitenscheiben gerichtet sind und im Defrostermodus mit (warmer) Luft versorgt werden. Eine Belüftung der hinteren Seitenscheiben ist aufgrund der zwischen der hinteren und vorderen Seitenscheibe meistens vorhandenen B-Säule mit diesen vorderen Defrosterdüsen regelmäßig nicht oder nur schlecht möglich.

Daneben ist es erwünscht, nicht nur die Passagiersitz der ersten Reihe über in der Konsole angeordnete Düsen mit frischer Luft im Belüftungsbetrieb des Lüftungssystems zu versorgen, sondern auch die hinteren Passagiersitze.

In der DE 32 27 886 A1 wird vorgeschlagen, eine Säulenverkleidung der B-Säule beabstandet zum B-Säulenrahmen dergestalt anzuordnen, daß zwischen dem Verkleidungsteil und dem Rahmenteil ein Luftführungskanal ausgebildet wird. Über diesen Luftführungskanal kann die von der vorderen Defrosterluftführung ausgehende Luftströmung über die vorderen Seitenscheiben nach hinten zu den hinteren Seitenscheiben gelangen. Die Möglichkeit der Luftzuführung zu den hinteren Seitenscheiben ist hier zwar grundsätzlich verbessert, insgesamt ist der Strömungsweg jedoch von den vorderen Defrosterdüsen ausgehend bis zu den hinteren Seitenscheiben hier relativ lang, so daß eine effektive Belüftung nicht oder nur schlecht möglich ist. Ein ähnlicher Aufbau ist auch aus der JP 7-291050 bekannt.

Aus der EP 0 765 723 A1 ist eine Vorrichtung zur Belüftung von Fahrzeugscheiben in einem Fahrzeug bekannt, die ein in einem Scheibenbereich verlaufendes Rahmenteil einer Fahrzeugkarosserie aufweist, das zum Innenraum hin mit einem Verkleidungsteil abdeckbar ist, wobei im Bereich zwischen dem Rahmenteil und dem Verkleidungsteil ein energieabsorbierendes Element vorgesehen ist, das mit einem Luftführungskanal gekoppelt ist, und wobei wenigstens eine in Richtung auf eine zugeordnete Fahrzeugscheibe gerichtete Auslaßdüse vorgesehen ist. Eine ähnliche Anordnung ist aus der EP 1 263 618 B1 bekannt.

In der JP 05085150 A ist ein Belüftungssystem beschrieben, bei dem ein Lüftungskanal vom Fahrzeugboden über eine Karosseriesäule ins Dach geführt ist. Im Bereich unterhalb des Seitenfensters und im Dach weist der Lüftungskanal zwei einstellbare Belüftungsdüsen auf, die entsprechend der Wünsche der Fahrzeuginsassen ausgerichtet werden können. Mittels eines Ventils kann wahlweise die untere oder die obere Belüftungsdüse mit Frischluft versorgt werden. Nachteilig ist jedoch der recht große Platzbedarf des Lüftungskanales im oberen Bereich der Karosseriesäule und im Dach. Weiterhin ist eine Defrosterfunktion des Seitenfensters nur bedingt gegeben.

Aus der DE 2318097A ist eine Ausströmanordnung in der A-Säule eines Kraftfahrzeuges bekannt, d.h. der Säule mit der Windschutzscheibe, um dort die Defrosterfunktion für die Windschutzscheibe und die Seitenfenster zu übernehmen. Dabei sind die Ausströmdüsen entlang der Seitenkanten der A-Säule angeordnet, um eine gleichmäßig verteilte Ausströmung über die Höhe der Scheiben bzw. Fenster zu erreichen. Diese Ausströmanordnung ist jedoch nicht geeignet, wesentlich zur Belüftung des Fahrzeuginnenraumes beizutragen.

Demgegenüber besteht die Aufgabe der Erfindung darin, ein Lüftungssystem für ein Fahrzeug bereitzustellen, das neben der Belüftung der Seitenfenster auch eine Belüftung der Passagiersitze erlaubt. Dabei soll das System einfach und kostengünstig aufgebaut sein, aber trotzdem die gezielte Belüftung ermöglichen und dies in Abhängigkeit des jeweiligen Betriebsmodus des Lüftungssystems.

Diese Aufgabe wir durch das in Anspruch 1 wiedergegebene Lüftungssystem gelöst. Vorteilhafte Ausgestaltungen ergeben sich aus den Unteransprüchen.

Dadurch, daß das Lüftungssystem zweite Belüftungsöffnungen in der Karosseriesäule, insbesondere der B-Säule des Fahrzeugs, für einen Passagiersitz aufweist, die unterhalb der ersten Belüftungsöffnungen angeordnet sind und die ebenfalls durch den Luftführungskanal mit Luft versorgt werden, wobei das Verhältnis der Luft aus dem Luftführungskanal, die an die ersten und zweiten Belüftungsöffnungen gelangt, über ein Ventil regelbar ausgestaltet ist, ist es möglich, sowohl die hinteren Seitenscheiben als auch die Passagiersitze der hinteren Reihe mit demselben Luftzuführungskanal mit Luft aus dem Lüftungssystem zu versorgen, wobei das Verhältnis bzw. die Versorgung über das nur eine Ventil gesteuert werden kann. Somit ist es möglich in Abhängigkeit des

Betriebsmodus des Lüftungssystems gezielt den je nach Modus gewünschten Bereich gezielter mit mehr Luft zu versorgen oder den anderen Bereich von der Versorgung vollständig zu trennen. Das Ventil erlaubt also auch ein Abschalten der Luftversorgung einer der Belüftungsöffnungen zu Gunsten der verbleibenden Belüftungsöffnungen. Insbesondere eignet sich das Lüftungssystem für die Belüftung einer hinteren Sitzreihe.

Sinnvollerweise sind auch die zweiten Belüftungsöffnungen in der Karosseriesäule, insbesondere B-Säule des Fahrzeugs, vorgesehen. Die erlaubt die Verwendung des ohnehin bereits dort verlegten Luftführungskanals und die B-Säule bietet sich zudem an, da diese relativ viel Raum für den Einbau des Luftführungskanals und der Belüftungsöffnungen zur Verfügung stellt. Bevorzugt ist es, wenn die zweiten Belüftungsöffnungen etwas unterhalb der Höhe der Gürtellinie der Fahrzeugtüren angeordnet sind. So wird vermieden, daß nur die Füße oder nur der Oberkörper oder Kopf der Passagiere belüftet werden. Als Gürtellinie wird hier die Unterkante der Seitenscheiben verstanden.

In einer weiteren bevorzugten Ausführungsform sind die Belüftungsöffnungen Bestandteil einer B-Säule des Kraftfahrzeugs, wobei wenigstens eine Auslassdüse auf eine dieser B-Säule benachbarte hintere Seitenscheibe gerichtet ist. Vorteilhaft ergibt sich bei einer solchen Anordnung in einer B-Säule eines Kraftfahrzeugs, daß auf einfache Weise ein Beschlagen der hinteren Seitenscheiben bei einer entsprechenden kalten oder nassfeuchten Witterung vermeidbar ist. Der Luftführungskanal kann dann hier als Defrosterkanal und die Auslaßdüse als Defrosterdüse fungieren. Vorzugsweise sind die ersten Belüftungsöffnungen für das Seitenfenster dabei entlang einer Seitenkante, insbesondere in der Höhe, des Fensters oberhalb der Gürtellinie angeordnet.

Vorteilhaft sind die ersten Belüftungsöffnungen für ein Seitenfenster oberhalb und die zweiten Belüftungsöffnungen unterhalb der Gürtellinie angeordnet. Dann strömt die Luft aus den ersten Belüftungsöffnungen im wesentlichen auf die Seitenfenster, während die Luft aus dem zweiten Belüftungsöffnungen im wesentlichen in den Passagierraum unterhalb der Seitenfenster strömt.

Erfindungsgemäß ist das Ventil derart einstellbar ausgestaltet, daß nur die ersten Belüftungsöffnungen im Defrosterbetrieb mit Luft versorgt werden. Dies sorgt für eine optimale Enteisungswirkung bzw. Aufheben einer Beschlagung.

Dabei ist das Ventil derart einstellbar ausgestaltet ist, daß sowohl die ersten als auch die zweiten Belüftungsöffnungen im Belüftungsbetrieb mit Luft versorgt werden. Somit kann ein Beschlagen der Seitenscheiben verhindert werden und gleichzeitig die Frischluftzufuhr der Passagiere sichergestellt werden. Diese Ausgestaltung ist besonders in der Übergangszeit zwischen Sommer und Winter sinnvoll. Vorzugsweise wird das Ventil dann so eingestellt, daß das Verhältnis an der Luft zu Gunsten der zweiten Belüftungsöffnungen ausfällt.

In einer weiteren bevorzugten Ausgestaltung sind das Ventil und der Luftführungskanal der ersten Belüftungsöffnungen so aufeinander abgestimmt, daß im Belüftungsbetrieb die ersten Belüftungsöffnungen durch hohen Druckverlust nahezu blockiert werden und über wiegend die zweiten Belüftungsöffnungen mit Luft versorgt werden. Dies kann durch eine passende Abstimmung der Öffnungsquerschnitte im Luftführungskanal der ersten Belüftungsöffnungen und der vom Ventil freigegebenen Öffnungen erreicht werden. Dies erlaubt eine einfachere Ausführung des Ventils, da im Belüftungsbetrieb besagter Luftführungskanal nicht vollständig abgesperrt werden muß.

Die Einstellung des Verhältnisses der Luft für die ersten und zweiten Belüftungsöffnungen kann automatisch von einer Klimaanlage und/oder manuell einstellbar ausgestaltet sein. In beiden Fällen ist die Bedienung der Klappe sehr einfach, da nur eine Verstellmöglichkeit gegeben ist. Dies ermöglicht sowohl einen einfachen Aufbau der Steuerungselement für die manuelle als auch die automatische Bedienung.

Das eingesetzte Ventil kann z. B. eine Klappe sein, deren Verstellung den Luftstrom im Luftführungskanal für die verschiedenen Belüftungsöffnungen aufteilt bzw. ggf. abtrennt, d. h. eine Belüftungsöffnung von der Luftversorgung trennt.

Für eine gezielte Luftströmung, insbesondere für die erwünschte anliegende Luftströmung, kann im Bereich der Belüftungsöffnungen wenigstens eine Blende angeordnet sein. Diese Blenden umfassen vorzugsweise Strömungslamellen, die eine gezieltere und ggf. richtungsverstellbare Luftströmung ermöglichen.

Vorteilhaft ist ein Heizelement im Luftführungskanal angeordnet, welches vorteilhafterweise elektrisch betrieben ist, z. B. ein PTC-Element. Aufgabe ist es, die durchströmende Luft geringfügig zu erwärmen um die Wärmeverluste im langen Strömungsweg von der Klimaanlage bzw. Heizung zur B-Säule zu kompensieren. Das Heizelement muß aber nicht zwangsläufig elektrische betrieben sein, vielmehr kann es auf jede andere bekannte und geeignete Weise die durchströmende Luft im Luftführungskanal erwärmen. Auch kann das Heizelement im Lüftungskanal vor oder hinter dem Ventil angeordnet sein. Im ersteren Fall wird die Luft für die ersten und zweiten Belüftungsöffnungen beheizt, wobei im Belüftungsbetrieb das Heizelement sinnvollerweise nicht heizt, sondern nur im Defrosterbetrieb. Im zweiten Fall kann durch die Lage des Heizelementes ohnehin nur die Luft für die ersten Belüftungsöffnungen, die im wesentlichen für die Entfrostung vorgesehen sind, beheizt werden.

Weitere Merkmale, Einzelheiten und Vorteile der Erfindung ergeben sich aus der nachfolgenden Beschreibung von Ausführungsbeispielen anhand der Zeichnung.

Es zeigen:
- Fig. 1: eine schematische Seitenansicht einer hinteren Sitzreihe eines Fahrzeugs mit Blickrichtung auf eine Tür mit einem nicht erfindungsgemäßen Lüftungssystem im Belüftungsmodus;
- Fig. 2: die schematische Seitenansicht aus Fig. 1 mit dem Lüftungssystem im Defrostermodus und
- Fig. 3: eine schematische Seitenansicht eines erfindungsgemäßen Lüftungssystems.

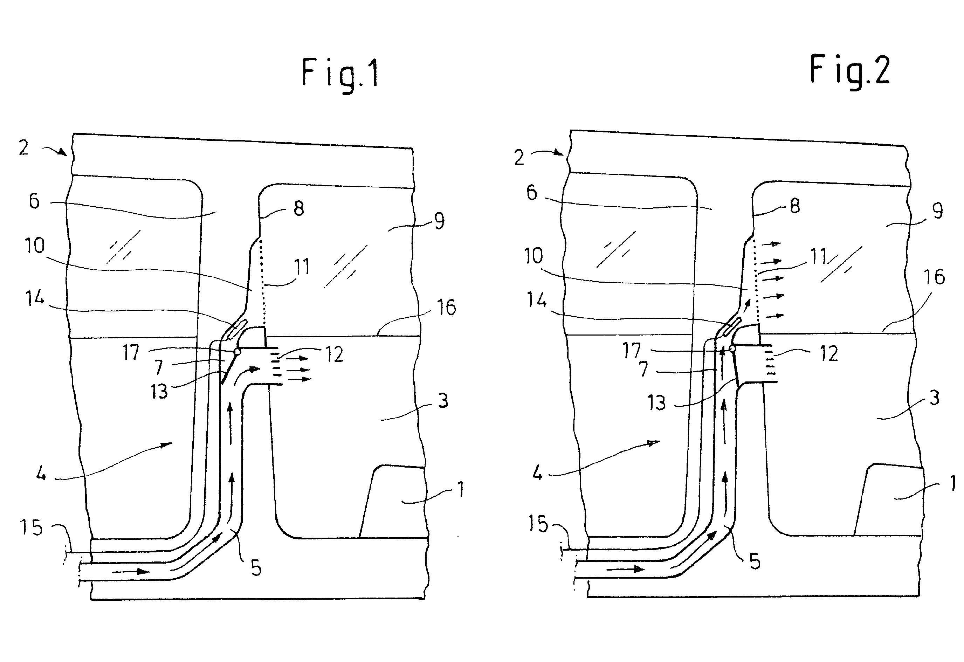

Figuren 1 und 2 zeigen eine schematische Seitenansicht einer hinteren Sitzreihe 1 eines Innenraums eines Fahrzeugs 2 mit Blickrichtung auf eine Tür 3 mit einem Lüftungssystem 4.

Das Lüftungssystem 4 umfaßt einen Luftführungskanal 5, der in der B-Säule 6 des Fahrzeugs 2 eingebaut ist. Dabei ist es unerheblich, ob der Luftführungskanal 5 nur in der Verkleidung der B-Säule 6 eingesetzt oder in der B-Säule 6 selbst eingelassen ist. Üblicherweise besteht der Luftführungskanal 5 aus einem Kunststoffblasteil. Der Luftführungskanal 5 erweitert sich auf Höhe unterhalb der der Gürtellinie 16 bzw. der Scheibenöffnung der Tür 3 zu einem Verteilungsbereich 7.

Vom Verteilungsbereich 7 erstreckt sich nach oben entlang der vorderen Seitenkante 8 des Seitenfensters 9 ein weiterer Luftführungskanal 10, der der Höhe nach angeordnete erste Belüftungsöffnungen 11 aufweist, um das Seitenfenster 9 mit Luft zu versorgen.

Der Verteilungsbereich 7 weist ferner an seiner der Sitzreihe 1 zugewandten Seite zweite Belüftungsöffnungen 12 auf, die ebenfalls durch den Luftführungskanal 5 mit Luft versorgt werden.

Im Verteilungsbereich 7 ist eine Ventilklappe 13 vorgesehen, die im Lagerpunkt 17 drehbar gelagert ist, durch die das Verhältnis der Luft aus dem Luftführungskanal 5, die an die ersten und zweiten Belüftungsöffnungen 11, 12 gelangt, regelbar ist.

In Figur 1 ist die Einstellung der Ventilklappe 13 derart, daß die Luft aus dem Luftführungskanal 5 nur durch die zweiten Belüftungsöffnungen 12 strömt, was durch Pfeile angedeutet ist. Gestrichelt ist die Stellung der Ventilklappe im Defrosterbetrieb dargestellt. Die Ventilklappe 13 ist dazu so umgestellt bzw. verdreht, daß der Luftführungskanal 10 abgesperrt ist, wozu sie den Verteilungsbereich 7 etwa schräg verlaufend unterhalb der Verbindung zum Luftführungskanal 10 vollständig trennt. Das Lüftungssystem 4 befindet sich also im sommerlichen Lüftungsbetriebsmodus.

In Figur 2 ist dagegen die Ventilklappe 13 so eingestellt, daß die Luft aus dem Luftführungskanal 5 nur durch die ersten Belüftungsöffnungen 11 auf das Fenster 9 strömt, was ebenfalls durch Pfeile angedeutet ist, wozu sie den Verteilungsbereich 7 etwa senkrecht verlaufend zu den Belüftungsöffnungen 12 vollständig trennt. Das Lüftungssystem 4 befindet sich hier im Defrostermodus.

Die Ventilklappe 13 ist also ausreichend bemessen und entsprechend angeordnet, um den Verteilungsbereich 7 sowohl senkrecht verlaufend zu den Belüftungsöffnungen 12 als auch schräg zu der Verbindung zum Luftführungskanal 10 vollständig zu trennen.

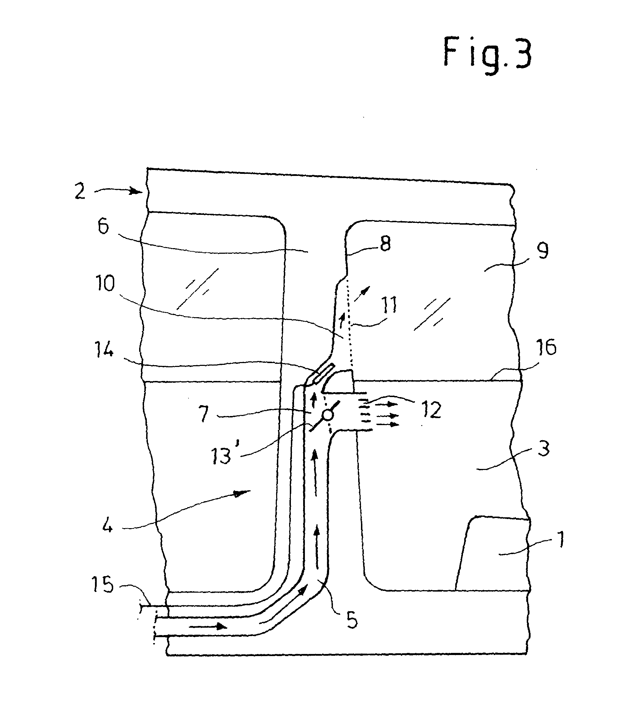

In der Figur 3 ist eine erfindungsgemäße Ausführungsform eines Lüftungssystems 4 dargestellt, daß sich im Wesentlichen durch ein verändertes Ventil 13' von dem vorhergehenden unterscheidet, so daß auf eine Wiederholung der Beschreibung des sonstigen Aufbaus verzichtet wird.

Das Ventil 13' ist hier wiederum eine Ventilklappe, die auch im Verteilungsbereich 7 angeordnet ist. Allerdings ist diese derart bemessen, daß sie den Querschnitt des Verteilungsbereichs 7 nicht vollständig von der Verbindung zum Luftführungskanal 10 trennen kann, wie dies bei Fig. 1 der Fall ist, sondern lediglich eine Aufteilung der Luftzufuhr vornimmt.

Der Hauptstrom der Luft fließt also durch die zweiten Belüftungsöffnungen 12 in Richtung der Sitzreihe 1. Ein kleiner Teil fließt an der Ventilklappe 13' vorbei durch den Luftführungskanal 10 und die ersten Belüftungsöffnungen 11 auf das Fenster 9. Diese Einstellung der Ventilklappe 13' gilt für den sommerlichen Lüftungsbetriebsmodus bzw. den Betrieb in der Übergangszeit. Dies ist durch die Pfeile angedeutet, deren Anzahl jeweils zur Verdeutlichung der veränderten Strömungsstärke der Luft reduziert ist.

Die Stellung der Ventilklappe 13' im Defrostermodus ist in Fig. 3 gestrichelt dargestellt. In diesem Fall ist die Ventilklappe 13 ausreichend bemessen, um wie bei Fig. 2, den Verteilungsbereich 7 senkrecht verlaufend zu den Belüftungsöffnungen 12 vollständig zu trennen. Somit ergibt sich im Defrostermodus kein Unterschied zur Ausführungsform der Fig. 2. Dies ist möglich, da die Ausmaße des Verteilungsbereichs 7 und der Ventilklappe 13' geschickt aufeinander in den unterschiedlichen Richtung des jeweils gewünschten Luftstroms abgestimmt sind. So entspricht die Länge der Ventilklappe 13' dem Höhenquerschnitt des Verteilungsbereichs 7, aber nicht der längeren Schräge zwischen den Wänden für die Abtrennung der Verbindung zum Luftführungskanal 10.

Zur weiteren Verbesserung des Lüftungssystems ist ein Heizelement 14 in den Luftführungskanal 10 eingesetzt. Das Heizelement 14 ist im Verteilungsbereich 7 oberhalb der Ventilklappe 13 angeordnet und über einen Anschluß 15 mit der Klimasteuerung verbunden. Es ist vorteilhafterweise elektrisch betrieben und kann z. B. ein PTC-Element sein, der Anschluß 15 wäre dann ein Kabel. Aufgabe des Heizelement ist es, die Luft für die erste Belüftungsöffnung 11 geringfügig zu erwärmen. Damit sind Wärmeverluste im langen Strömungsweges von der Klimaanlage bzw. Heizung zur B-Säule 2 kompensierbar und/oder die Ausströmtemperatur kann höher sein als z. B. bei den vorderen Defrosterdüsen in der Instrumententafel. Insbesondere mit elektronisch geregelter Klimaanlage ist dies sinnvoll einsetzbar, weil bei dem geringen Volumenstrom durch 11 ein elektrisches Heizelement leistungsmäßig klein ausgelegt werden kann. U. a. wird damit das elektrische Verteilsystem und der Fahrzeuggenerator nur gering belastet und weniger belastet, als wenn ein größer dimensioniertes Heizelement an der Klimaanlage selbst betrieben würde.

### Bezugszeichenliste

- 1: Sitz
- 2: Fahrzeug
- 3: Tür
- 4: Lüftungssystem
- 5: Luftführungskanal
- 6: B-Säule
- 7: Verteilungsbereich
- 8: vordere Seitenkante
- 9: Seitenfenster
- 10: Luftführungskanal
- 11: erste Belüftungsöffnungen
- 12: zweite Belüftungsöffnungen
- 13, 13': Ventilklappe
- 14: Heizelement
- 15: Anschluß
- 16: Gürtellinie

## Patentansprüche

1. Fahrzeug mit einem Lüftungssystem (4) für Scheiben (9) und Passagiersitze (1) wobei das Lüftungssystem erste Belüftungsöffnungen (11) in einer Karosseriesäule (6), insbesondere der B-Säule des Fahrzeugs, für ein Seitenfenster (9) aufweist, die durch einen Luftführungskanal (5) und einen weiteren Luftführungskanal (10) mit Luft versorgt werden, wobei
- das Lüftungssystem (4) zweite Belüftungsöffnungen (12) in der Karosseriesäule (6), insbesondere der B-Säule des Fahrzeugs, für einen Passagiersitz (1) aufweist, die unterhalb der ersten Belüftungsöffnungen (11) angeordnet sind und die ebenfalls durch den Luftführungskanal (5) mit Luft versorgt werden,
- das Verhältnis der Luft aus dem Luftführungskanal (5) die an die ersten und zweiten Belüftungsöffnungen (11, 12) gelangt, über ein in einem Verteilungsbereich (7) angeordnetes Ventil (13') regelbar ausgestaltet ist,
- das Ventil (13') derart einstellbar ausgestaltet ist, daß nur die ersten Belüftungsöffnungen (11) im Defrosterbetrieb mit Luft versorgt werden und sowohl die ersten als auch die zweiten Belüftungsöffnungen (11, 12) im Belüftungsbetrieb mit Luft versorgt werden, und
- eine Ventilklappe des Ventils (13') derart bemessen ist, daß sie den Querschnitt des Verteilungsbereiches (7) nicht vollständig von der Verbindung zum weiteren Luftführungskanal (10) trennen kann.

2. Fahrzeug nach Anspruch 1, **dadurch gekennzeichnet, daß** die ersten Belüftungsöffnungen (11) für das Seitenfenster (9) entlang einer Seitenkante (8) in der Höhe des Seitenfensters (9) angeordnet sind.

3. Fahrzeug nach Anspruch 1 oder 2, **dadurch gekennzeichnet, daß** die ersten Belüftungsöffnungen (11) für ein Seitenfenster (9) oberhalb und die zweiten Belüftungsöffnungen (12) unterhalb der Gürtellinie (16) angeordnet sind.

4. Fahrzeug nach einem der vorherigen Ansprüche, **dadurch gekennzeichnet, daß** das Ventil (13') und der weitere Luftführungskanal (10) der ersten Belüftungsöffnungen (11) so aufeinander abgestimmt sind, daß im Belüftungsbetrieb die ersten Belüftungsöffnungen (11) durch hohen Druckverlust nahezu blockiert werden und überwiegend die zweiten Belüftungsöffnungen (12) mit Luft versorgt werden.

5. Fahrzeug nach einem der vorherigen Ansprüche, **dadurch gekennzeichnet, daß** das Ventil (13') das Verhältnis der Luft zu Gunsten der zweiten Belüftungsöffnungen (12) regelt.

6. Fahrzeug nach einem der vorhergehenden Ansprüche, **dadurch gekennzeichnet, daß** das Ventil eine Klappe (13, 13') ist.

7. Fahrzeug nach einem der vorhergehenden Ansprüche, **dadurch gekennzeichnet, daß** ein Heizelement (14) in einem Luftführungskanal (10) angeordnet ist.

## Claims

1. Vehicle having a ventilation system (4) for window panes (9) and passenger seats (1), with the ventilation system having first ventilation openings (11) in a body pillar (6), in particular the B pillar of the vehicle, for a side window (9), which first ventilation openings are supplied with air through an air-guiding duct (5) and a further air-guiding duct (10),
- with the ventilation system (4) having second ventilation openings (12) in the body pillar (6), in particular the B pillar of the vehicle, for a passenger seat (1), which second ventilation openings are arranged below the first ventilation openings (11) and are likewise supplied with air through the air-guiding duct (5),
- with it being possible for the ratio of air from the air-guiding duct (5) which passes to the first and second ventilation openings (11, 12) to be regulated by means of a valve (13') arranged in a distributing region (7),
- with the valve being designed to be adjustable such that only the first ventilation openings (11) are supplied with air in the defrost mode and both the first and also the second ventilation openings (11, 12) are supplied with air in the ventilation mode, and
- with a valve flap of the valve (13') being dimensioned such that it cannot fully separate the cross section of the distributing region (7) from the connection to the further air-guiding duct (10).

2. Vehicle according to Claim 1, **characterized in that** the first ventilation openings (11) for the side window (9) are arranged along a side edge (8) at the level of the side window (9).

3. Vehicle according to Claim 1 or 2, **characterized in that** the first ventilation openings (11) for a side window (9) are arranged above the sill line (16) and the second ventilation openings (12) are arranged below the sill line (16).

4. Vehicle according to one of the preceding claims, **characterized in that** the valve (13') and the further air-guiding duct (10) of the first ventilation openings (11) are coordinated with one another such that, in the ventilation mode, the first ventilation openings (11) are virtually blocked as a result of the high pressure loss, and predominantly the second ventilation openings (12) are supplied with air.

5. Vehicle according to one of the preceding claims, **characterized in that** the valve (13') regulates the ratio of the air in favour of the second ventilation openings (12).

6. Vehicle according to one of the preceding claims, **characterized in that** the valve is a flap (13, 13').

7. Vehicle according to one of the preceding claims, **characterized in that** a heating element (14) is arranged in an air-guiding duct (10).

## Revendications

1. Véhicule comprenant un système de ventilation (4) pour les vitres (9) et les sièges des passagers (1), le système de ventilation présentant des premières ouvertures de ventilation (11) dans une colonne de la carrosserie (6), notamment de la colonne B du véhicule, pour une fenêtre latérale (9), qui sont alimentées en air par un canal de guidage d'air (5) et un canal de guidage d'air supplémentaire (10),
- le système de ventilation (4) présentant des deuxièmes ouvertures de ventilation (12) dans la colonne de la carrosserie (6), notamment la colonne B du véhicule, pour un siège de passager (1), lesquelles sont disposées sous les premières ouvertures de ventilation (11) et sont également alimentées en air par le canal de ventilation (5),
- le rapport de l'air sortant du canal de guidage d'air (5), qui parvient aux premières et deuxièmes ouvertures de ventilation (11, 12), étant configuré de manière réglable par le biais d'une soupape (13') disposée dans une région de distribution (7),
- la soupape (13') étant configurée de manière ajustable de telle sorte que seulement les premières ouvertures de ventilation (11) soient alimentées en air en mode de dégivrage et qu'à la fois les premières et les deuxièmes ouvertures de ventilation (11, 12) soient alimentées en air en mode de ventilation, et un clapet de soupape (13') étant dimensionné de telle sorte qu'il ne puisse pas séparer complètement la section transversale de la région de distribution (7) de la connexion au canal de guidage d'air supplémentaire (10).

2. Véhicule selon la revendication 1, **caractérisé en ce que** les premières ouvertures de ventilation (11) pour la fenêtre latérale (9) sont disposées le long d'une arête latérale (8) à la hauteur de la fenêtre latérale (9).

3. Véhicule selon la revendication 1 ou 2, **caractérisé en ce que** les premières ouvertures de ventilation (11) pour une fenêtre latérale (9) sont disposées au-dessus, et les deuxièmes ouvertures de ventilation (12) sont disposées en dessous, de la ligne de ceinture (16).

4. Véhicule selon l'une quelconque des revendications précédentes, **caractérisé en ce que** la soupape (13') et le canal de guidage d'air supplémentaire (10) des premières ouvertures de ventilation (11) sont adaptés l'un à l'autre de telle sorte qu'en mode de ventilation, les premières ouvertures de ventilation (11) soient pratiquement bloquées par une grande perte de pression et que principalement les deuxièmes ouvertures de ventilation (12) soient alimentées en air.

5. Véhicule selon l'une quelconque des revendications précédentes, **caractérisé en ce que** la soupape (13') régule le rapport d'air en faveur des deuxièmes ouvertures de ventilation (12).

6. Véhicule selon l'une quelconque des revendications précédentes, **caractérisé en ce que** la soupape est un clapet (13, 13').

7. Véhicule selon l'une quelconque des revendications précédentes, **caractérisé en ce qu'**un élément de chauffage (14) est disposé dans un canal de guidage d'air (10).
